# EUROPÄISCHE PATENTSCHRIFT

(11) **EP 2 377 999 B1**
(45) Veröffentlichungstag und Bekanntmachung des Hinweises auf die Patenterteilung: **29.05.2013**
(21) Anmeldenummer: 11003124.2
(22) Anmeldetag: 13.04.2011
(51) Int. Cl.: E01C 19/48, B60K 17/356, F16H 61/4035, F16H 61/456, F16H 61/431, B60K 23/08, F16H 61/4148, F16H 59/44, F16H 59/58, F16H 59/52, B60W 40/12

(54) **Vorderantrieb eines Straßenfertigers und Verfahren zur Steuerung desselben**
Front drive of a road finisher and method for controlling same
Entraînement avant d'une finisseuse de route et procédé de commande de celui-ci

(30) Priorität: 14.04.2010 DE 102010014901
(43) Veröffentlichungstag der Anmeldung: 19.10.2011
(73) Patentinhaber: BOMAG GmbH & Co. OHG, 56154 Boppard (DE)
(72) Erfinder: Christ, Hermann, 56288 Bubach (DE); Hagen, Irina, 56283 Halsenbach (DE); Nick, Moritz, 56154 Boppard (DE)
(74) Vertreter: Lang, Friedrich

(56) Entgegenhaltungen:
- EP-A1- 0 743 219
- EP-A1- 0 916 541
- DE-A1- 3 911 229
- JP-A- 6 166 344

## Beschreibung

Die Erfindung betrifft einen Straßenfertiger zum Verlegen von Straßenbaumaterial mit einer Einbaubohle, einem Bunker zur Aufnahme von Straßenbaumaterial, einem Radfahrwerk mit einer Hinterachse und mit einer lenkbaren Vorderachse sowie einer Hydraulikanordnung zum permanenten oder optional zuschaltbaren Antrieb von Hydraulikmotoren, welche an die Vorderräder gekoppelt sind. Die Erfindung betrifft ferner ein Verfahren zur Zugkraftregelung und zur Antriebsschlupfbegrenzung des Vorderantriebs eines Straßenfertigers.

Straßenfertiger mit Radfahrwerken zeichnen sich durch ihre Mobilität und Wendigkeit gegenüber denen mit Kettenfahrwerken aus. Üblicherweise sind die Radfahrwerke von Straßenfertigern mit einem permanenten Hinterradantrieb und einem zusätzlichen Vorderradantrieb ausgestattet, welcher bei Bedarf, beispielsweise zur Erhöhung der Traktion im Arbeitsbetrieb, zugeschaltet werden kann. Aufgrund von äußeren Einflüssen, wie beispielsweise unterschiedliche Reibungsverhältnisse, sich ändernde Achslast der Vorderachse etc., ist es schwierig, eine optimale Traktion zu gewährleisten, so dass ein schlupffreier Antrieb bei maximaler Zugkraft erreicht wird. EP 743 219 zeigt die Merkmale des Oberbegriffes der Anspruüche 1 und 12.

Im Bereich der für Baumaschinen üblichen hydraulischen Antriebssysteme haben sich die so genannten "Load-Sensing-Systeme" durchgesetzt. Dabei wird zur Minimierung von Verlustleistung und zur bedarfsgerechten Versorgung mehrerer hydraulischer Verbraucher der Pumpendruck so geregelt, dass ein konstanter Drucküberschuss gegenüber dem lasthöchsten Verbraucher aufrechterhalten wird. Dieser Drucküberschuss, welcher typischerweise zwischen 20 und 30 bar liegt, wird üblicherweise über eine Federvorspannung im Stellzylinder der Verstellpumpe eingestellt. Es besteht hierbei der Bedarf, die Verlustleistung, die sich aus dem Drucküberschuss und dem Förderstrom zusammensetzt, weiterhin zu reduzieren.

Zur Begrenzung des Antriebsschlupfes sind Straßenfertiger bekannt, welche mittels ständiger Drehzahlüberwachung für jedes Rad eine Abweichung der Ist-Drehzahl von der Soll-Drehzahl erkennen und gegebenenfalls durch Drehzahlbegrenzung entgegenwirken. Hierbei ist es nachteilig, dass der Aufwand an Sensorik und Regelung zu hoch ist.

Der Erfindung liegt daher die Aufgabe zugrunde, die Zugkraft des permanenten oder optional zuschaltbaren Vorderradantriebs optimal zu regeln und gleichzeitig eventuell auftretenden Radschlupf an den Vorderrädern aktiv zu begrenzen. Darüber hinaus ist es Ziel der Erfindung, den Regelungsaufwand und auch die Kosten zu senken.

Die Aufgabe wird gelöst durch den Gegenstand des unabhängigen Anspruchs 1 und durch das Verfahren gemäß Anspruch 12.

Die abhängigen Ansprüche sind auf vorteilhafte Ausführungsformen der Erfindung gerichtet.

Der erfindungsgemäße Straßenfertiger zum Verlegen von Straßenbaumaterial, umfasst eine Einbaubohle, einen Bunker zur Aufnahme von Straßenbaumaterial sowie ein Radfahrwerk mit einer Hinterachse mit mindestens zwei permanent angetriebenen Hinterrädern und mit einer lenkbaren Vorderachse, einer Einfach- oder Tandemachse, mit n, vorzugsweise zwei oder vier, Vorderrädern. Des weiteren umfasst der erfindungsgemäße Straßenfertiger Mittel zur Ermittlung der Achslast der Vorderachse, des Lenkwinkels, und der Arbeitsgeschwindigkeit des Straßenfertigers. Weiterhin ist erfindungsgemäß eine Hydraulikanordnung zum permanenten oder optional zuschaltbaren Antrieb von n Hydraulikmotoren, welche jeweils an je ein Vorderrad gekoppelt sind, vorgesehen.

Die erfindungsgemäße Hydraulikanordnung umfasst n Steuerventile mit Drosseln, wobei die Querschnitte der Drossel individuell einstellbar sind, und n Druckwaagen, bevorzugt mit n-1 Wechselventilen. Sie weist eine Verstellpumpe, eine Druck- und Förderstrom geregelte Pumpe, auf. Des weiteren ist eine elektronische Steuereinheit vorgesehen, welcher derart ausgelegt ist, dass sie einen Soll-Differenzdruck zwischen einem Pumpendruck stromabwärts der Verstellpumpe/ stromaufwärts der Steuerventile und einem höchsten Lastdruck stromabwärts der Druckwaagen/ stromaufwärts der Hydraulikmotoren vorgibt.

Die erfindungsgemäße Hydraulikanordnung umfasst ferner eine Druckmessvorrichtung zur Ermittlung eines Ist-Differenzdruckes zwischen dem Pumpendruck und dem höchsten Lastdruck und ein Pumpenregelventil zur Verstellung des Förderstroms der Verstellpumpe, welches derart ausgelegt ist, dass es den ist-Differenzdruck auf den Soll-Differenzdruck regelt.

Der Erfindung liegt die Erkenntnis zugrunde, dass die Druckdifferenz zwischen dem Pumpendruck und dem höchsten Lastdruck in einfacher Weise als Regelgröße zur Optimierung der Traktion herangezogen werden kann. Damit wird nicht nur die maximale Zugkraft für die Vorderräder erzielt, sondern auch der Schlupf effektiv begrenzt. Es sind keine zusätzlichen Ausgaben für kostenintensive Sensorik, Aktuatorik oder Regelung erforderlich, da nur bereits bekannte Bauteile verwendet werden.

Anstelle der Meldeleitung für den höchsten Lastdruck an der Verstellpumpe wird ein Pumpenregelventil, beispielsweise ein herkömmliches Proportionalventil, zur Bestimmung des Load-Sensing-Druckes eingesetzt, um eine Dosierung der Zugkraft vornehmen zu können. Mit diesem Pumpenregelventil ist es gleichzeitig auch möglich, unter Berücksichtigung der Abweichung der Ist-Differenzdrucks vom Soll-Differenzdruck aktiv den Antriebsschlupf zu begrenzen, indem die Verstellpumpe entsprechend derart verstellt wird, dass der Ist-Differenzdruck auf den Soll-Differenzdruck eingeregelt wird.

Das erfindungsgemäße Verfahren zur Zugkraftregelung und Antriebsschlupfbegrenzung für den Vorderantrieb eines Straßenfertigers umfasst die Schritte des Ermittelns von optimalen Differenzdrücken zwischen dem Pumpendruck und dem höchsten Lastdruck für jeden Betriebspunkt in Anhängigkeit von der Achslast der Vorderachse, dem Lenkwinkel und der Arbeitsgeschwindigkeit auf einem Prüfstand und des Ablegens der ermittelten Differenzdrücke in Form von Kennlinien/ Kennfeldern in der elektronischen Steuereinheit (ECU).

Die optimalen Differenzdrücke können auch mit Hilfe eines Modells zur Laufzeit berechnet werden unter Berücksichtigung der Einflussgrößen wie Achslast der Vorderachse und Arbeitsgeschwindigkeit. Dieses Modell beinhaltet die mathematische Darstellung des Differenzdruckes als Funktion der Achslast der Vorderachse und der Arbeitsgeschwindigkeit.

Der Soll-Differenzdruck zwischen dem Pumpendruck und dem höchsten Lastdruck ergibt sich aus der Wahl des Ventilkolbens und der geforderten Menge (Geschwindigkeit). Dies ist eine feste Größe in Abhängigkeit von der Durchflussmenge. Steigt der Differenzdruck an, ist das ein Indikator dafür, dass mehr Zugkraft bereitgestellt wird als übertragen werden kann. Dies bedeutet, dass Verlustleistung vorliegt. Ist der Differenzdruck kleiner als erwartet, bedeute dies, dass eine höhere Zugkraft übertragen werden könnte.

Im Betrieb wird dann der vorliegende Betriebspunkt bestimmt. Anhand dieses Betriebspunktes wird der zuvor im Prüfstand ermittelte Soll-Differenzdruck in Abhängigkeit vom momentanen Betriebspunkt als Führungsgröße ausgegeben. Ist der Ist-Differenzdruck ermittelt, wobei dazu ein Differenzdrucksensor oder zwei einfache Drucksensoren verwendet werden können, so kann beim Vorliegen einer Abweichung der lst-Differenzdrucks auf den Soll-Differenzdruck geregelt werden.

Für jeden Verbraucher, in diesem Fall Hydraulikmotor, können die gewünschten Differenzdrücke separat auf dem Prüfstand unter Variation der Einflussgrößen Achslast, Lenkwinkel und Fahrtgeschwindigkeit bestimmt werden.

Die Mengezuteilung im Betrieb erfolgt für jeden Motor separat über drosselnde Steuerventile, beispielsweise Proportionalventile, wobei gilt, dass der Volumenstrom Q am Ventil vom Öffnungsquerschnitt A der Drossel im Steuerventil abhängt. Dieser wiederum ist eine Funktion des elektrischen Stroms 1, welcher durch die elektromagnetische Verstellvorrichtung des Proportionalventils strömt. Die Menge wird unter Berücksichtigung der Geschwindigkeit oder Drehzahl der Hinterachse so zugeteilt, dass im Wesentlichen die Umfangsgeschwindigkeit der Vorderräder der der Hinterräder entspricht. Es ist bekannt, dass der Volumenstrom proportional zum Querschnitt der Drossel ist. Mit der Vorgabe des Drosselquerschnitts ist also die Drehzahl des Hydraulikmotors bzw. die Radgeschwindigkeit festgelegt.

Die Zugkraftdosierung erfolgt über den mittels des Pumpenregelventils proportional dosierbaren Load-Sensing-Druck an der Pumpe. Als Indikator für die Schlupfgrenze dient der Differenzdruck zwischen Pumpe und dem höchsten Lastdruck. Der Strom am Pumpenregelventil wird solange erhöht, bis die Druckdifferenz zwischen Pumpendruck und höchstem Lastdruck größer wird als erwartet. Theoretisch würden die Vorderräder in diesem Fall durchdrehen, was allerdings dadurch verhindert wird, dass die Fördermenge über die Steuerventile definiert sind. Um Verlustleistung wegen einer zu hohen Druckdifferenz zu vermeiden, wird der Druck am Pumpenregelventil reduziert, bis der Soll-Differenzdruck wieder erreicht ist.

Es ist möglich, eine Vorsteuerung entsprechend der Achslast vorn, beispielsweise über Messung der Zylinderdrücke, auszuführen. Ebenso ist es möglich, die Vorsteuerung entsprechend Druck hinten (Zugkraft an der Hinterachse) mit entsprechendem Vorlauf vorzunehmen.

Es besteht auch die Möglichkeit, den Strom vom Pumpenregelventil der Verstellpumpe als Vergleichsgröße zur Verfügung zu stellen. Damit könnte ein Drucksensor eingespart werden.

Ohne einen Achslastindikator an der Vorderachse ist eine Zugkraft-Zuteilung an den Vorderrädern möglich, indem die Zugkraft an den Hinterrädern mittels eines Drucksensors erfasst wird. Proportional zu diesem Druck könnte der Druck an der Vorderachse eingeregelt werden. Allerdings ist es nachteilig, dass hierbei nur das Einbaubohlengewicht, je nach seiner Position, als Teilgröße für die Achslastermittlung und somit für die Zugkraftzuteilung heranzuziehen ist.

Vorzugsweise umfasst die elektronische Steuereinheit Kennlinien/ Kennfelder, aus denen für jeden Betriebspunkt der zugehörige Soll-Differenzdruck entnehmbar ist. Die optimale Soll-Differenz kann auch wie oben beschreiben ermittelt werden. Die elektronische Steuereinheit kann herkömmlicher Bauart mit einem Speicher sein.

Gemäß einer vorteilhaften Ausführungsform der Erfindung ist der Betriebspunkt in Abhängigkeit von der Achslast der Vorderachse, dem Lenkwinkel und der Arbeitsgeschwindigkeit ermittelbar.

Zur Ermittlung der Achslast der Vorderachse werden drei Zustände der Bohle unterschieden, welche die Achslast beeinflussen: die Bohle befindet sich oben, die Bohle befindet sich unten bei aktiver Bohlenentlastung bzw. die Bohle befindet sich unten in Schwimmstellung. Die Information, welcher Zustand eingenommen ist, liegt in der elektronischen Steuereinheit aus folgendem Grund vor. Bei aktiver Bohlenentlastung sind die jeweiligen Entlastungsdrücke (links und rechts), die unten an den Zylindern anstehen, bekannt. Entweder werden diese Drücke direkt gemessen oder können aufgrund der Ventilansteuerung und den entsprechenden Kennlinien ermittelt werden.

Weiterhin umfassen die Mittel zur Ermittlung der Achslast der Vorderachse vorzugsweise einen Füllstandssensor, zum Beispiel durch einen Ultraschallsensor oder mehrere Ultraschallsensoren, welcher den Füllstand des Bunkers angibt. Es sind berührungslose Sensoren bekannt, die den Füllgrad anzeigen, so dass das Gewicht des Straßenbaumaterials mit in die Berechnung der Achslast einfließen kann. Alternativ kann die Achslast auch durch Kraftmessbolzen an der Aufhängung der Vorderachse, durch Druckmessung an den Zylindern zur Verstellung der Vorderachsaufhängung oder durch Druckmessung an den Hydraulikzylindern, die gegebenenfalls an den Hebeln einer Tandemachse der Vorderräder angelenkt sind, ermittelt werden. Mittel zur Erfassung des Lenkwinkels können Weggeber oder auch Winkelmesser sein. Mittel zur Erfassung der Arbeitsgeschwindigkeit des Stra-βenfertigers sind vorzugsweise Drehzahlsensoren an der Hinterachse.

Gemäß einer weiteren Ausführungsform der Erfindung ist vorgesehen, dass das Pumpenregelventil ein Proportionalventil ist. Mit dessen Hilfe kann der Druck und damit die Zugkraft feinfühlig dosiert werden.

Vorzugsweise sind die Steuerventile 2/2-Proportional-Wegeventile mit stufenlos einstellbaren Drosselquerschnitten. Damit wird eine genaue Mengenzuteilung ermöglicht. Ebenso wird auch die Möglichkeit gegeben, einzelne Hydraulikmotoren abschalten zu können, falls beispielsweise nur zwei von vier Vorderrädern zusätzlich zu den Hinterrädern angetrieben werden sollen.

Gemäß einer weiteren vorteilhaften Ausführungsform der Erfindung umfasst die elektronische Steuereinheit Kennlinien/ Kennfelder zur Ermittlung von Soll-Strom für jedes Steuerventil. Dazu werden die Ventilcharakteristiken in der elektronischen Steuereinheit abgelegt, so dass die Steuerventile direkt von der elektronischen Steuereinheit angesteuert werden können.

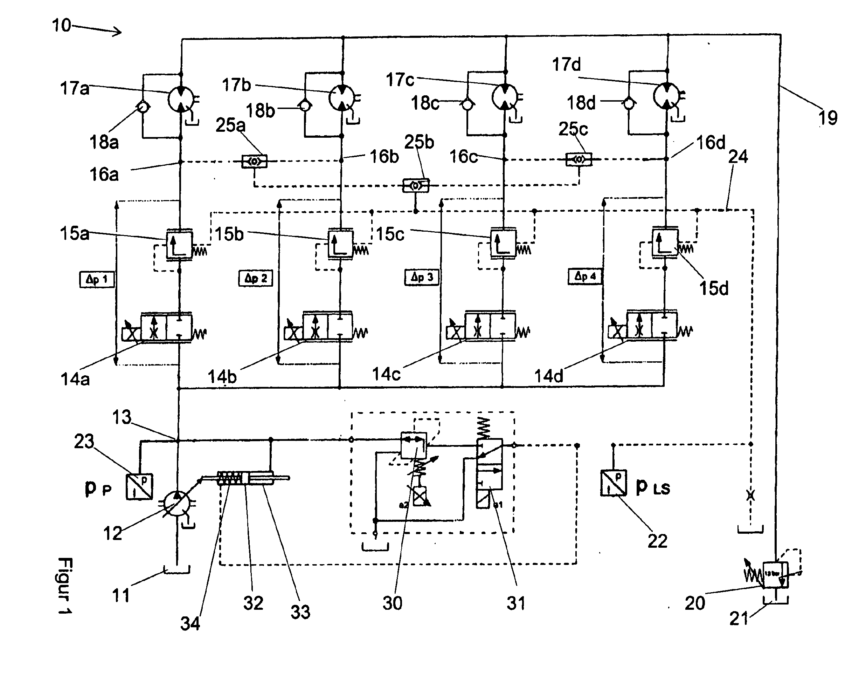

Die Erfindung wird anhand der einzigen Figur näher erläutert. Figur 1 zeigt schematisch den Hydraulikschaltplan der erfindungsgemäßen Hydraulikanordnung.

Die beispielsweise von einem Dieselmotor (nicht gezeigt) angetriebene Verstellpumpe 12 versorgt die aus vier Hydraulikmotoren 17a, 17b, 17c, 17d bestehenden Verbraucher mit Hydrauliköl aus dem Tank 11. Der Pumpendruck pₚ ist beispielsweise an der Stelle 13 über eine Druckmessvorrichtung 23 erfassbar. Der Förderstrom der Verstellpumpe 12 wird auf die einzelnen Verbraucher 17a - 17d verteilt. Jeder Verbraucher wird über drosselnde Steuerventile, die als Proportional-Wegeventile 14a - 14d ausgeführt sind, versorgt. Die Steuerventile, die über die elektronische Steuereinheit (nicht gezeigt) individuell angesteuert werden können, können stetig ihre Drosselquerschnitte verstellen. Gemäß der bekannten Drosselgleichung ist der Volumenstrom proportional zum Öffnungsquerschnitt. Damit bestimmt der Öffnungsquerschnitt die Drehzahl des Hydraulikmotors. Jedem Steuerventil 14a - 14d ist eine Druckwaage 15a - 15d nachgeschaltet. Die Druckwaagen 15a -15d sind proportionale Druckbegrenzungsventile, wobei an jedem der Druckwaagen 15a -15d der höchste Lastdruck _{PLs} anliegt. Die Druckwaagen 15a -15d sorgen für einen geregelten Volumenstrom, indem der Druckabfall Δp1 - Δp2 an den Steuerventilen 14a - 14d unabhängig von Schwankungen konstant gehalten wird.

Wechselventile 25a bis 25c sind an den Stellen 16a - 16d und untereinander derart verschaltet, dass immer der höchste Lastdruck in der Leitung 24 vorliegt. Dieser höchste Lastdruck p_{LS} ist beispielsweise über eine Druckmessvorrichtung 22 erfassbar. Das an den Motoren 17a - 17d verbrauchte Hydrauliköl verlässt die Hydraulikanordnung 10 über die Leitung 19. Ein Vorspannventil 20 kann zur Sicherstellung eines Mindestdrucks, beispielsweise 12 bar, an den Niederdruckseiten der Motoren 17a - 17d vorgesehen sein. Jeder Hydraulikmotor 17a - 17d umfasst vorzugsweise ein Nachsaugventil 18a -18d für hydraulischen Freilauf, wenn die Hinterachse schneller ist.

Die Druckdifferenz Δp = pₚ - p_{Ls} wird erfindungsgemäß als Regelgröße für eine optimale Traktion herangezogen. Die im Prüfstand ermittelten Werte für Soll-Differenzdrücke sind in der elektronischen Steuereinheit hinterlegt. Je nach Betriebspunkt gibt es einen Soll-Differenzdruck, den es einzuhalten gilt, um einen schlupffreien Vorderantrieb bei maximaler Zugkraft zu verwirklichen. Das Pumpenregelventil 30 regelt den Förderstrom der Verstellpumpe 12 derart, dass der Ist-Differenzdruck für jeden Öffnungsquerschnitt einem vorgegebenen Soll-Differenzdruck entspricht. Im Unterschied zu gewöhnlichen Load-Sensing-Systemen ist also der Differenzdruck nicht für alle Betriebspunkte festgelegt, sondern kann variabel gewählt werden, um ein Optimum an Effizienz bei maximaler Zugkraft und Schlupfbegrenzung zu erzielen. Zur Verstellung der Verstellpumpe 12 ist ein federbelasteter Hydraulikkolben 32 vorgesehen, der auf der rechten Seite 33 mit dem Pumpendruck und auf der linken Seite 34 mit dem reduzierten Druck des Pumpenregelventils 30 und der Federkraft beaufschlagt wird. Die Position des Hydraulikkolbens 32 wird dann verändert, wenn das Kräftegleichgewicht zwischen der rechten 33 und der linken Seite 34 beispielsweise infolge von Änderungen der Drosselquerschnitte der Proportionalventile 14a - 14d verändert wird. Durch eine direkte Ansteuerung des Pumpenregelventils 30 kann auf die Regelung eingegriffen werden.

## Patentansprüche

1. Straßenfertiger zum Verlegen von Straßenbaumaterial, umfassend:
- eine Einbaubohle;
- einen Bunker zur Aufnahme von Straßenbaumaterial;
- ein Radfahrwerk mit einer Hinterachse mit mindestens zwei permanent angetriebenen Hinterrädern und mit einer lenkbaren Vorderachse, einer Einfach- oder Tandemachse, mit n, vorzugsweise n = 2 oder n = 4, Vorderrädern;
- Mittel zur Ermittlung der Achslast der Vorderachse, des Lenkwinkels und der Arbeitsgeschwindigkeit des Straßenfertigers; und
- eine Hydraulikanordnung (10) zum permanenten oder optional zuschaltbaren Antrieb von n Hydraulikmotoren (17a - 17d), welche jeweils an je ein Vorderrad gekoppelt sind, **dadurch gekennzeichnet, dass** die Hydraulikanordnung (10) umfasst :
- n Steuerventile (14a - 14d) mit Drosseln, wobei die Querschnitte der Drossel individuell einstellbar sind;
- n Druckwaagen (15a - 15d);
- eine Verstellpumpe (12);
- eine elektronische Steuereinheit, welche derart ausgelegt ist, dass sie einen Soll-Differenzdruck zwischen einem Pumpendruck (pₚ) stromabwärts der Verstellpumpe (12) /stromaufwärts der Steuerventile (14a - 14d) und einem höchsten Lastdruck (p_{LS}) stromabwärts der Druckwaagen (15a - 15d) / stromaufwärts der Hydraulikmotoren (17a - 17d) vorgibt; eine Druckmessvorrichtung (22, 23) zur Ermittlung eines Ist-Differenzdruckes zwischen dem Pumpendruck (pₚ) und dem höchsten Lastdruck (p_{LS});
- ein Pumpenregelventil (30) zur Verstellung des Förderstroms der Verstellpumpe (12), welches derart ausgelegt ist, dass es den Ist-Differenzdruck auf den Soll-Differenzdruck regelt.

2. Straßenfertiger nach Anspruch 1, **dadurch gekennzeichnet,**
**dass** die Druckwaagen (15a - 15d) jeweils n-1 Wechselventile (25a - 25c) aufweisen.

3. Straßenfertiger nach Anspruch 1 oder 2,
**dadurch gekennzeichnet,**
**dass** die elektronische Steuereinheit Kennlinien/ Kennfelder umfasst, aus denen für jeden Betriebspunkt der zugehörige Soll-Differenzdruck entnehmbar ist.

4. Straßenfertiger nach einem der vorhergehenden Ansprüche,
d**adurch gekennzeichnet**,
dass der Betriebspunkt in Abhängigkeit von drei Zuständen der Einbaubohle ermittelt wird, welche die Achslast beeinflussen: Bohle befindet sich oben, die Bohle befindet sich unten bei aktiver Bohlenentlastung bzw. die Bohle befindet sich unten in Schwimmstellung.

5. Straßenfertiger nach einem der vorhergehenden Ansprüche,
**dadurch gekennzeichnet,**
**dass** die Mittel zur Ermittlung der Achslast der Vorderachse einen Positionssensor umfassen, welcher die Position der Einbaubohle in Bezug auf das verlegte Straßenbaumaterial angibt.

6. Straßenfertiger nach einem der Ansprüche 1 bis 4,
**dadurch gekennzeichnet,**
**dass** die Mittel zur Ermittlung der Achslast der Vorderachse einen Kraftmessbolzen an einer Aufhängung der Vorderradachse umfassen.

7. Straßenfertiger nach einem der Ansprüche 1 bis 4,
**dadurch gekennzeichnet,**
**dass** die Mittel zur Ermittlung der Achslast der Vorderachse einen Druckmesser an den Zylindern zur Verstellung der Vorderachsaufhängung umfassen.

8. Straßenfertiger nach einem der Ansprüche 1 bis 4,
**dadurch gekennzeichnet,**
**dass** die Mittel zur Ermittlung der Achslast der Vorderachse einen Füllstandssensor, insbesondere einen Ultraschallsensor, umfassen, welcher den Füllstand des Bunkers angibt.

9. Straßenfertiger nach einem der vorhergehenden Ansprüche,
**dadurch gekennzeichnet,**
**dass** das Pumpenregelventil (30) ein Proportionalventil ist.

10. Straßenfertiger nach einem der vorhergehenden Ansprüche,
**dadurch gekennzeichnet,**
**dass** die Steuerventile (14a - 14d) 2/2-Proportional-Wegeventile mit stufenlos einstellbaren Drosselquerschnitten sind.

11. Straßenfertiger nach einem der vorhergehenden Ansprüche,
**dadurch gekennzeichnet,**
**dass** die elektronische Steuereinheit Kennlinien/ Kennfelder zur Ermittlung von Soll-Strom für jedes Steuerventil (14a - 14d) umfasst.

12. Verfahren zur Zugkraftregelung und Antriebsschlupfbegrenzung für den Vorderantrieb eines Straßenfertigers gemäß einem der vorhergehenden Ansprüche, umfassend folgende Schritte:
Ermitteln von optimalen Differenzdrücken zwischen dem Pumpendruck (p_{P}) und dem höchsten Lastdruck (p_{LS}) für jeden Betriebspunkt in Anhängigkeit von der Achslast der Vorderachse, dem Lenkwinkel und der Arbeitsgeschwindigkeit auf einem Prüfstand;
Ablegen der ermittelten Differenzdrücke in Form von Kennlinien/ Kennfeldern in der elektronischen Steuereinheit; **gekennzeichnet durch**
Bestimmung des Betriebspunktes;
Ermitteln des Soll-Differenzdrucks in Abhängigkeit vom momentanen Betriebspunkt;
Ermitteln des Ist-Differenzdrucks; und
Regeln des Ist-Differenzdrucks auf den Soll-Differenzdruck.

## Claims

1. A road paver for laying road construction material, comprising:
- a tamping beam;
- a bunker for receiving road construction material;
- a wheeled chassis with a rear axle with at least two permanently driven rear wheels and with a steerable front axle, a single or tandem axle, comprising n, preferably n = 2 or n = 4, front wheels;
- means for determining the axle load of the front axle, the steering angle and the working speed of the road paver, and
- a hydraulic arrangement (10) for the permanent or optionally selectable drive of n hydraulic motors (17a -17d), which are each coupled to a front wheel,
**characterized in that**
the hydraulic arrangement comprises:
- n control valves (14a - 14d) with throttles, with the cross sections of the throttles being individually adjustable;
- n pressure balances (15a - 15d);
- a variable displacement pump (12);
- an electronic control unit which is arranged in such a way that it predetermines a reference differential pressure between a pump pressure (pₚ) downstream of the variable displacement pump (12) / upstream of the control valves (14a - 14d) and a highest load pressure (p_{LS}) downstream of the pressure balances (15a -15d) / upstream of the hydraulic motors (17a -17d);
- a pressure measuring apparatus (22, 23) for determining an actual differential pressure between the pump pressure (pₚ) and the highest load pressure (p_{LS});
- a pump control valve (30) for adjusting the transport stream of the variable displacement pump (12), which is arranged in such a way that it adjusts the actual differential pressure to the reference differential pressure.

2. The road paver according to claim 1,
**characterized in that**
the pressure balances (15a - 15d) comprise each n-1 shuttle valves (25a - 25c).

3. The road paver according to any one of claims 1 or 2,
**characterized in that**
the electronic control unit comprises characteristics/characteristic maps in which the associated reference differential pressure for each operating point is shown.

4. The road paver according to any one of the preceding claims,
**characterized in that**
the operating point is determined depending on three positions of the tamping beam, which influence the axle load: the tamping beam is in its upper position, the tamping beam is in its lower position with active beam load release, the tamping beam is in its lower position in floating position.

5. The road paver according to any one of the preceding claims,
**characterized in that**
the means for determining the axle load of the front axle comprise a position sensor, which indicates the position of the tamping beam relative to the laid construction material.

6. The road paver according to any one of claims 1 to 4,
**characterized in that**
the means for determining the axle load of the front axle comprise a load measuring bolt on a mounting of the front wheel axle.

7. The road paver according to any one of claims 1 to 4,
**characterized in that**
the means for determining the axle load of the front axle comprise pressure measurement means at the cylinders for the adjustment of the front axle mounting.

8. The road paver according to any one of claims 1 to 4,
**characterized in that**
the means for determining the axle load of the front axle comprise a filling level sensor, especially an ultrasonic sensor, which indicates the filling level of the bunker.

9. The road paver according to any one of the preceding claims,
**characterized in that**
the pump control valve (30) is a proportional valve.

10. The road paver according to any one of the preceding claims,
**characterized in that**
the control valves (14a - 14d) are 2/2-proportional directional control valves with continuously adjustable throttle cross sections.

11. The road paver according to any one of the preceding claims,
**characterized in that**
the electronic control unit comprises characteristics/characteristic maps for determining the reference flow for each control valve (14a -14d).

12. A method for tractive power control and drive slip limitation for the front drive of a road paver according to any one of the preceding claims, comprising the following steps:
- determining optimal differential pressures between the pump pressure (pₚ) and the highest load pressure (p_{LS}) for every operating point depending on the axle load of the front axle, the steering angle and the working speed on a test stand;
- saving the determined differential pressures in the form of characteristics/characteristic maps in the electronic control unit ;
**characterized in that**
- the operating point is determined;
- the reference differential pressure is determined depending on the momentary operating point;
- the actual differential pressure is determined, and
- the actual differential pressure is adjusted to the reference differential pressure.

## Revendications

1. Finisseur pour l'application de matériau de chaussée, comprenant
- une table;
- une trémie destinée à recevoir du matériau de chaussée;
- un châssis sur roues avec un essieu arrière muni de deux roues arrières à entraînement permanent et avec un essieu avant orientable, un essieu simple ou tandem, avec n roues avant, de préférence n = 2 ou n = 4;
- des moyens pour déterminer la masse à l'essieu de l'essieu avant, l'angle de direction et la vitesse de travail du finisseur; et
- un dispositif hydraulique (10) pour l'entraînement permanent ou activable en option de n moteurs hydrauliques (17a-17d) accouplés chacun à une roue avant,
**caractérisé en ce que** le dispositif hydraulique (10) comprend:
- n distributeurs (14a-14d) avec des soupapes d'étranglement, la section des soupapes d'étranglement pouvant être ajustée individuellement;
- n balances de pression (15a-15d);
- une pompe à cylindrée variable (12);
- une unité de commande électronique conçue de manière à déterminer une consigne de pression différentielle entre une pression de pompe (pₚ) en aval de la pompe à cylindrée variable (12) ou en amont des distributeurs (14a-14d) et une pression de charge maximale (pₗₛ) en aval des balances de pression (15a-15d) ou en amont des moteurs hydrauliques (17a-17d);
- un dispositif de mesure de la pression (22, 23) destiné à déterminer une pression différentielle réelle entre la pression de pompe (pₚ) et la pression de charge maximale (pₗₛ);
- une soupape de régulation de pompe (30) pour régler le débit de refoulement de la pompe à cylindrée variable (12), conçue de façon à régler la pression différentielle réelle à la consigne de pression différentielle.

2. Finisseur selon la revendication 1, **caractérisé en ce que** les balances de pression (15a-15d) présentent chacune n-1 soupapes à deux voies (25a-25c).

3. Finisseur selon la revendication 1 ou 2, **caractérisé en ce que** l'unité de commande électronique comporte des courbes caractéristiques/des champs caractéristiques desquels une consigne de pression différentielle correspondante peut être extraite pour chaque point de fonctionnement.

4. Finisseur selon l'une des revendications précédentes, **caractérisé en ce que** le point de fonctionnement est déterminé en fonction de trois états de la table qui influent sur la charge à l'essieu: table en haut, table en bas avec décharge active de la table, table en bas en position flottante.

5. Finisseur selon l'une des revendications précédentes, **caractérisé en ce que** les moyens pour déterminer la charge à l'essieu de l'essieu avant comprennent un capteur de position qui indique la position de la table par rapport au matériel de chaussée appliqué.

6. Finisseur selon l'une des revendications 1 à 4, **caractérisé en ce que** les moyens pour déterminer la charge à l'essieu de l'essieu avant comprennent un axe dynamométrique sur une suspension de l'essieu des roues avant.

7. Finisseur selon l'une des revendications 1 à 4, **caractérisé en ce que** les moyens pour déterminer la charge à l'essieu de l'essieu avant comprennent un manomètre sur les cylindres pour le déplacement de la suspension d'essieu avant.

8. Finisseur selon l'une des revendications 1 à 4, **caractérisé en ce que** les moyens pour déterminer la charge à l'essieu de l'essieu avant comprennent un capteur de niveau de remplissage, en particulier un capteur à ultrasons, qui indique le niveau de remplissage de la trémie.

9. Finisseur selon l'une des revendications précédentes, **caractérisé en ce que** la soupape de régulation de la pompe (30) est une soupape proportionnelle.

10. Finisseur selon l'une des revendications précédentes, **caractérisé en ce que** les distributeurs (14a-14d) sont des soupapes proportionnelles à 2/2 voies avec des sections d'étranglement réglables en continu.

11. Finisseur selon l'une des revendications précédentes, **caractérisé en ce que** l'unité de commande électronique comprend des courbes caractéristique/des champs caractéristiques pour déterminer le courant de consigne pour chaque distributeur (14a-14d).

12. Procédé pour la régulation de l'effort de traction et la limitation du patinage des roues motrices pour le train avant d'un finisseur selon l'une des revendications précédentes, comprenant les étapes suivantes:
- détermination de pressions différentielles optimales entre la pression de la pompe (pₚ) et la pression de charge maximale (pₗₛ) pour chaque point de fonctionnement en fonction de la charge à l'essieu de l'essieu avant, de l'angle de direction et de la vitesse de travail sur banc d'essai;
- enregistrement des pressions différentielles sous forme de courbes caractéristiques/champs caractéristiques dans l'unité de commande électronique;
**caractérisé en ce qu'**il comprend:
- la détermination du point de fonctionnement;
- la détermination de la consigne de pression différentielle en fonction du point de fonctionnement instantané;
- la détermination de la pression différentielle réelle; et
- le réglage de la pression différentielle réelle à la consigne de pression différentielle.
